# EUROPÄISCHE PATENTSCHRIFT

(11) **EP 1 767 083 B1**
(45) Veröffentlichungstag und Bekanntmachung des Hinweises auf die Patenterteilung: **09.09.2009**
(21) Anmeldenummer: 06019818.1
(22) Anmeldetag: 21.09.2006
(51) Int. Cl.: A01D 34/74

(54) **Schnitthöhen-Einstellvorrichtung für Rasenmäher**
Cutting-height adjustment device for lawn mowers
Dispositif de réglage de la hauteur de coupe pour tondeuses à gazon

(30) Priorität: 22.09.2005 DE 102005045239
(43) Veröffentlichungstag der Anmeldung: 28.03.2007
(73) Patentinhaber: Wolf-Garten GmbH & Co. KG, 57518 Betzdorf (DE)
(72) Erfinder: Held, Peter, 57584 Scheuerfeld (DE); Kipping, Andreas, 57537 Selbach (DE)
(74) Vertreter: Koch, Günther

(56) Entgegenhaltungen:
- DE-A1- 2 604 609
- DE-U1-202004 015 965
- GB-A- 2 367 475

## Beschreibung

Die Erfindung bezieht sich auf eine Schnitthöhen-Einstellvorrichtung für Rasenmäher, bei der vier Laufräder gleichzeitig über Kurbelarme und eine eine Verbindungsstange aufweisende Parallelogramm-Lenkeranordnung gegenüber dem Chassis in der Höhe einstellbar und über einen Verstellhebel einrastbar sind.

Eine derartige den Oberbegriff des Patentanspruchs 1 bildende Schnitthöhen-Einstellvorrichtung für Rasenmäher ist aus der GB 2 367 475 A bekannt. Hierbei ist ein mit der Verbindungsstange starr verbundener Verstellhebel vorgesehen, der Rastzähne trägt, die mit Nutausnehmungen im Chassis zusammenwirken. Die Einraststellung wird dadurch bewirkt, dass die Verbindungsstange und der Verstellhebel elastisch ausgebildet sind und der Verstellhebel durch die Federwirkung dieser elastischen Glieder in die Raststellung überführt wird. Aus dieser Raststellung kann der Verstellhebel seitlich ausgehoben werden, wobei sich der Verstellhebel und/oder die Verbindungsstange elastisch verformen. Die Anordnung ist dabei noch derart getroffen, dass bei einem harten Aufsetzen des Rasenmähers die Rastelemente ausrasten und der Rasenmäher in seine tiefste Absenkstellung überführt wird.

Ausgehend von diesem Stand der Technik liegt der Erfindung die Aufgabe zugrunde, die Höheneinstellung zu erleichtern und zu verbessern, indem eine feinfühlige Einstellung im praktischen Einsatz langzeitig gewährleistet wird.

Gelöst wird die gestellte Aufgabe durch die Kombination der im Kennzeichnungsteil des Patentanspruchs 1 angegebenen Merkmale. Durch diese Anordnung wird gewährleistet, dass über den Verstellhebel eine Kraftübersetzung erreicht wird, so dass nach seitlicher Auslenkung mit geringem Kraftaufwand die notwendige Verschiebung der Verbindungsstange nach vorn oder hinten erreicht wird.

Durch die Erfindung wird eine Anordnung geschaffen, bei der der Verstellhebel an der Gelenkstelle zu der Verbindungsstange sowohl einen axialen als auch einen radialen Formschluß zur sicheren Aufnahme der Bedien- und Betriebskräfte aufweist. Die Verbindung zwischen Verbindungsstange und Verstellhebel erfolgt ohne weitere Elemente und der erforderliche Federdruck auf die Verbindungsstange erfolgt durch den Verstellhebel selbst, unter Ausnutzung der federelastischen Eigenschaften seines Werkstoffs, so dass keine zusätzlichen Federelemente erforderlich sind.

Gemäß einer weiteren in den Unteransprüchen gekennzeichneten Anordnung ist die Gelenkstelle zwischen Verbindungsstange und Verstellhebel als Bajonettverschluß ausgeführt, wobei sich in der Montagestellung die Verbindungsstange und der Verstellhebel dicht aneinander bewegen, weil eine Verbindung über den Bajonettverschluß möglich ist. Nach dem endgültigen Zusammenbau ist der Verstellhebel nur noch zwischen den beiden Höhenverstell-Endstellungen bewegbar.

Weitere Ausgestaltungen der Erfindung ergeben sich aus den abhängigen Ansprüchen und aus der folgenden Beschreibung eines Ausführungsbeispiels.

Nachstehend wird ein Ausführungsbeispiel der Erfindung anhand der Zeichnung beschrieben. In der Zeichnung zeigen:

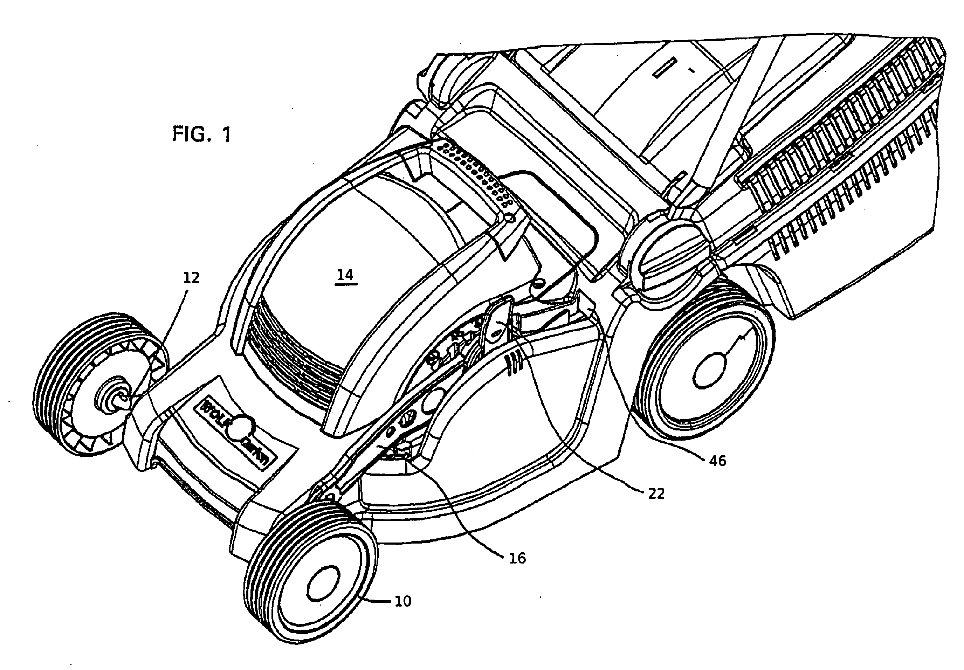

Figur 1 ist eine perspektivische Darstellung eines mit der erfindungsgemäßen Schnitthöhen-Einstellvorrichtung versehenen Rasenmähers;

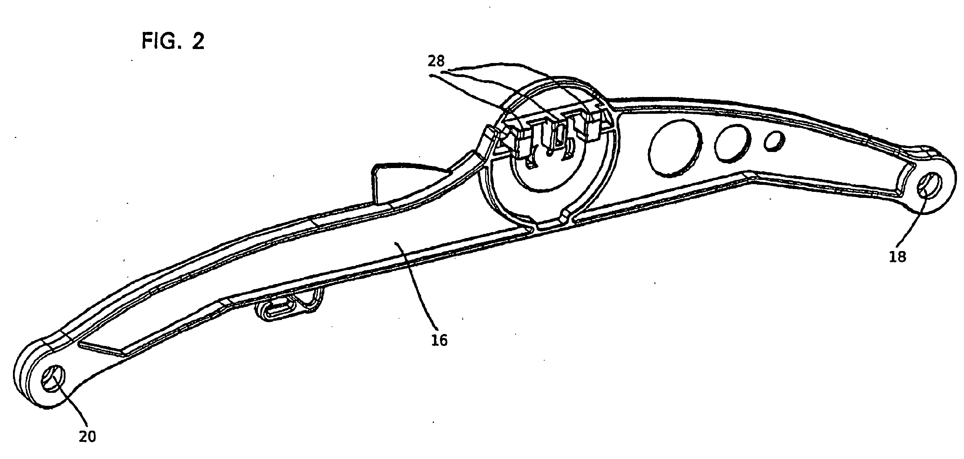

Figur 2 ist eine perspektivische Darstellung der Verbindungsstange, die ein Glied der Parallelogramm-Lenkeranordnung bildet;

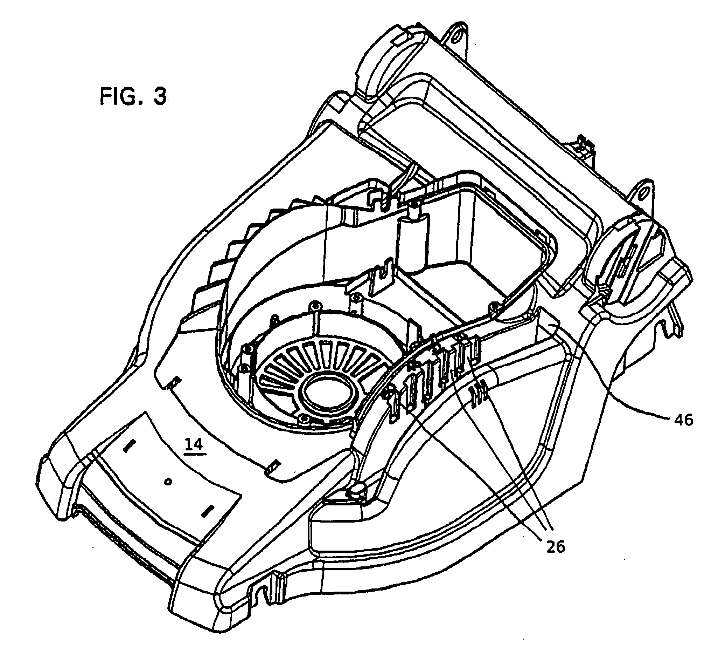

Figur 3 ist eine perspektivische Darstellung des Rasenmäher-Chassis, wobei die nutförmigen Verriegelungsausnehmungen ersichtlich sind;

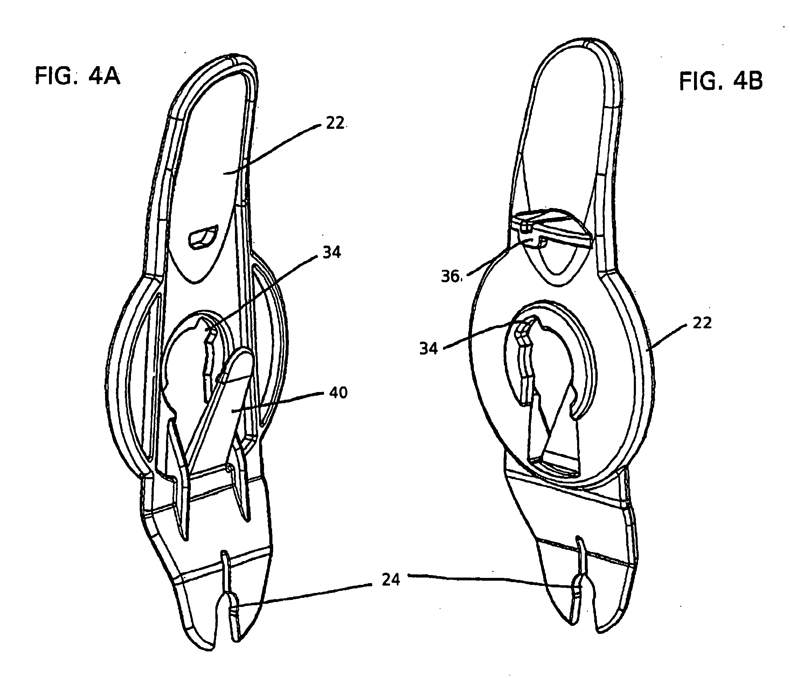

Figur 4A und 4B sind perspektivische Seitenansichten des Verstellhebels für die Verbindungsstange gemäß Figur 2;
Figur 5 ist eine perspektivische auseinandergezogene Darstellung von Verbindungsstange und Verstellhebel;
Figur 6 ist eine Ansicht des mit der Verbindungsstange zusammenwirkenden Verstellhebels, wobei die verschiedenen Funktionsstellungen erkennbar sind.

Die Räder 10 sind in üblichlicher Weise über Kurbelarme 12 im Chassis 14 des Rasenmähers gelagert. Diese Kurbelarme 12 werden in üblicher Weise über eine Parallelogramm-Lenkeranordnung gleichzeitig verschwenkt, wodurch der Abstand zwischen Boden und Schneidwerkzeugen eingestellt werden kann. Ein Glied der Parallelogramm-Lenkeranordnung der Höhenverstelleinrichtung wird von einer Verbindungsstange 16 gebildet, die über ein vorderes Lagerauge 18 und ein hinteres Lagerauge 20 an den im Chassis schwenkbar gelagerten Kurbelarmen angreift. Die Anordnung ist dabei derart getroffen, dass bei Verschiebung der Verbindungsstange nach vom das Chassis vom Boden abgehoben wird, und umgekehrt, bei einer Verschiebung der Verbindungsstange nach hinten das Chassis auf den Boden abgesenkt wird. Die Verschiebung der Verbindungsstange 16 zwecks Schnitthöhenverstellung erfolgt über einen Verstellhebel 22. Dieser Verstellhebel 22 ist über ein rastbares Lagerauge 24 schwenkbar auf einem nicht dargestellten chassis-festen Zapfen schwenkbar gelagert.

Das Rasenmäher-Chassis ist mit mehreren, im Ausführungsbeispiel mit sechs, parallel zueinander in vertikaler Richtung verlaufenden Nutausnehmungen 26 versehen, die zum Zweck der Verriegelung der Parallelogramm-Lenkeranordnung mit Zähnen 28 zusammenwirken, die an der Verbindungsstange in paralleler Anordnung vorgesehen sind. Gemäß dem Ausführungsbeispiel sind drei parallel zueinander angeordnete Zähne vorgesehen, die mit den nutförmigen Ausnehmungen 26 in Eingriff gebracht werden können. Aufgrund dieser Anordnung ergeben sich außer einer maximalen und einer minimalen Höheneinstellung noch zwei Zwischeneinstellungen, jedoch können auch andere Zahlen dieser Rastelemente Anwendung finden.

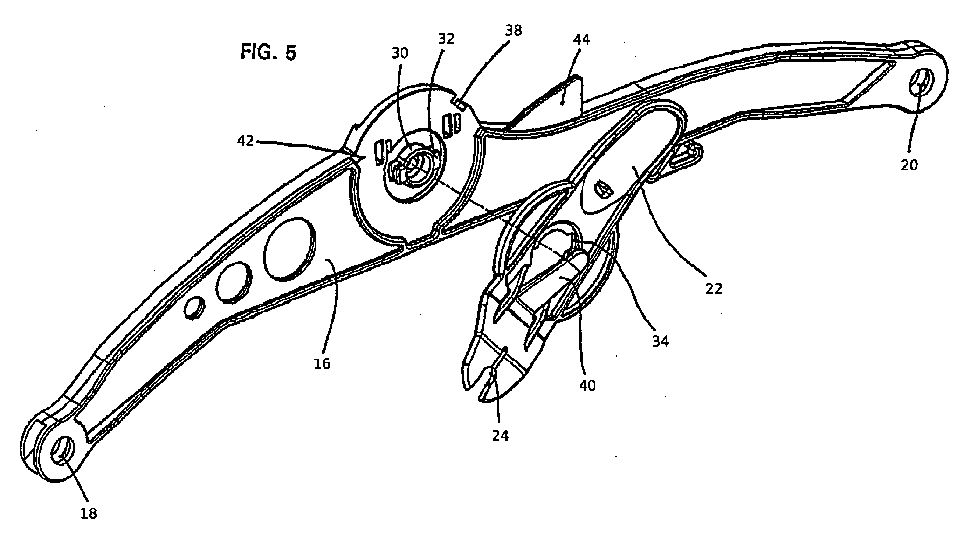

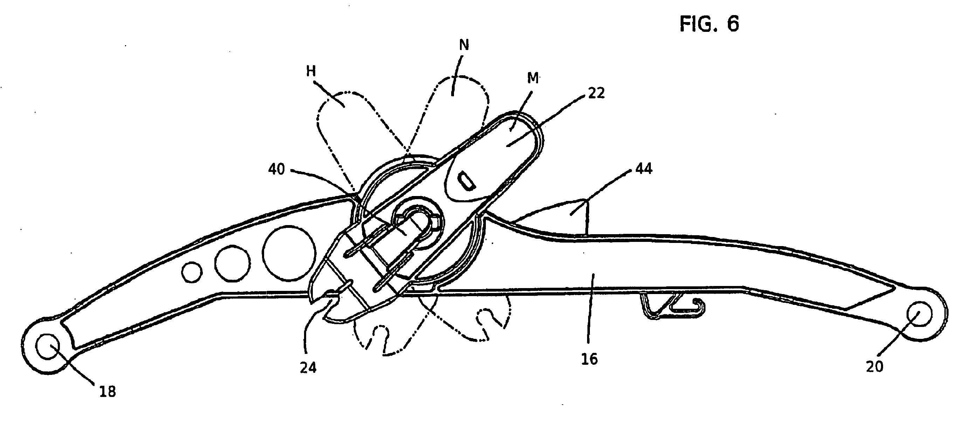

Der Verstellhebel 22 ist auf einer Lagerhülse 30 der Verbindungsstange schwenkbar gelagert. Die Lagerhülse 30 weist radial vorstehende Haltelaschen auf, die beim Aufsetzen des Verstellhebels (Figur 5) in entsprechende Schlüsselausnehmungen 34 eingreifen und eine bayonettartige Verriegelung bilden, wenn der Verstellhebel aus seiner Einsatzstellung (Figur 5) in seine Betriebsstellung verschwenkt wird. In Figur 6 ist die Einsatzstellung mit M bezeichnet, während die größte Laufhöhe mit H und die kleinste Laufhöhe mit N bezeichnet ist.

Beim Aufsetzen des Verstellhebels 22 auf die Lagerhülse 30 gleitet ein Haltehaken 36 des Verstellhebels durch eine Ausnehmung 38 der Verbindungsstange hindurch und sichert den Verstellhebel nach Verschwenkung durch Hintergreifen der kreisbogenförmigen Peripherie der Verbindungsstange. Dieser Haltehaken gewährleistet, dass der Verstellhebel insbesondere an der Oberseite der Verbindungsstange sauber anliegt, wodurch der Kraftfluß vom Verstellhebel in die Verbindungsstange bei dem Ausrastvorgang verkürzt wird. In den Verstellhebel 22 ist eine Federlasche 40 integriert. Diese Federlasche 40 stützt sich an der gegenüberliegenden glatten, senkrechten Chassis-Innenwand ab, die der Wand mit den nutförmigen Ausnehmungen 26 gegenüberliegt. Dadurch wird der Verstellhebel 22 gegen die Verbindungsstange gedrückt und diese wird wiederum mit ihren Zähnen 28 in die jeweils gegenüberliegenden nutförmigen Ausnehmungen 26 eingedrückt, wodurch sich nach Loslassen des Verstellhebels eine einwandfreie formschlüssige Verbindung zwischen Chassis und Verbindungsstange ergibt.

Die Höhenverstellung kann im eingebauten Zustand nur noch zwischen den Stellungen H und N bewegt werden. Die Wegbegrenzung für den Verstellhebel 22 in der Stellung H wird durch den Anschlag 42 an der Verbindungsstange 16 bewirkt, während in der anderen Endstellung N eine Anschlagrippe 44 der Verbindungsstange an dem querstehenden Chassis-Wandabschnitt 46 angreift.

Die Höhenverstellung erfolgt in der Weise, dass der Verstellhebel 22 gegen die Kraft der Federlasche 40 seitlich ausgehoben wird, wodurch gleichzeitig über die Haltelaschen 32 die Verbindungsstange 16 seitlich bewegt wird, und die Zähne 28 aus den Nutausnehmungen 26 des Chassis ausgehoben werden, wodurch die Verriegelung aufgehoben wird. Nunmehr kann der Verstellhebel 22 über sein rastbares Lagerauge 24 gegenüber dem Chassis verschwenkt werden, wobei die Verbindungsstange nach vom bzw. hinten bewegt wird und über die Parallelogramm-Lenkeranordnung und die Kurbelarme alle Räder gleichzeitig angehoben oder abgesenkt werden. Wird der Verstellhebel losgelassen, so drückt die Federlasche 40 die Zähne 28 in die jeweils gegenüberliegenden Nutausnehmungen ein, wodurch der Verriegelungsformschluß hergestellt wird.

Die Erfindung wurde vorstehend anhand eines Rasenmähers beschrieben. Sie ist jedoch auch für andere Gartengeräte, beispielsweise für Vertikutiergeräte anwendbar, bei denen ein Bedarf nach einer Höhenverstellung vorliegt.

### Bezugszeichenliste

- 10: Räder
- 12: Kurbelarme
- 14: Chassis
- 16: Verbindungsstange
- 18: vorderes Lagerauge
- 20: hinteres Lagerauge
- 22: Verstellhebel
- 24: rastbares Lagerauge
- 26: Nutausnehmungen
- 28: Zähne
- 30: Lagerhülse
- 32: Haltelaschen
- 34: Schlüsselausnehmungen
- 36: Haltehaken
- 38: Ausnehmung
- 40: Federlasche
- 42: Anschlag
- 44: Anschlagrippe
- 46: Chassiswandabschnitt

## Patentansprüche

1. Schnitthöhen-Einstellvorrichtung für Rasenmäher, bei der vier Laufräder gleichzeitig über Kurbelarme (12) und eine eine Verbindungsstange (16) aufweisende Parallelogramm-Lenkeranordnung gegenüber dem Chassis in der Höhe einstellbar und über einen Verstellhebel (22) einrastbar sind,
**gekennzeichnet durch** die folgenden Merkmale:
a) die Verbindungsstange (16) ist mit seitlichen Rastzähnen (28) ausgerüstet, die in Nutausnehmungen (26) des Chassis (14) in unterschiedlichen Raststellungen einrastbar sind;
b) der Verstellhebel (22) ist auf einem Drehlager (30) der Verbindungsstange (16) drehbar gelagert und über ein Lagerauge (24) am Chassis (14) verschwenkbar,
c) der Verstellhebel (22) spannt die Verbindungsstange (16) seitlich **durch** Federkraft gegen eine Chassis-Innenwand vor.

2. Schnitthöhen-Einstellvorrichtung nach Anspruch 1,
**dadurch gekennzeichnet, dass** der Verstellhebel (22) über einen Bajonettverschluss (32, 34) mit der Verbindungsstange (16) begrenzt drehbar verbunden ist.

3. Schnitthöhen-Einstellvorrichtung nach Anspruch 1,
**dadurch gekennzeichnet, dass** mit dem Verstellhebel (22) als Vorspannfeder eine Federlasche (40) integriert ist, die seitlich vom Verstellhebel (22) vorsteht und federnd an einer Gleitfläche des Chassis abgestützt ist.

4. Schnitthöhen-Einstellvorrichtung nach einem der Ansprüche 1 bis 3,
**dadurch gekennzeichnet, dass** der Verstellhebel (22) einen seitlich vorstehenden Haltehaken (36) aufweist, der eine periphere Gleitfläche der Verbindungsstange (16) hintergreift.

5. Schnitthöhen-Einstellvorrichtung nach einem der Ansprüche 1 bis 4,
**dadurch gekennzeichnet, dass** die Verbindungsstange (16) eine Anschlagrippe (44) aufweist, die in einer Endstellung an einem Chassis-Querwandabschnitt (46) angreift.

6. Schnitthöhen-Einstellvorrichtung nach einem der Ansprüche 1 bis 5,
**dadurch gekennzeichnet, dass** die Verbindungsstange (16) einen Anschlag (42) aufweist, an dem der Verstellhebel (22) in einer Endstellung angreift.

## Claims

1. A cutting height adjusting device for lawnmowers in which four support wheels are adjustable in height relative to the chassis simultaneously by way of crank arms (12) and a parallelogram link arrangement having a connecting rod (16) and are latchable by way of an adjusting lever (22), **characterised by** the following features:
a) the connecting rod (16) is provided with lateral latching teeth (28) which are latchable in groove openings (26) in the chassis (14) in different latching positions,
b) the adjusting lever (22) is mounted rotatably on a rotary mounting (30) of the connecting rod (16) and is pivotable by way of a mounting eye (24) on the chassis (14), and
c) the adjusting lever (22) biases the connecting rod (16) laterally against a chassis inside wall by spring force.

2. A cutting height adjusting device according to claim 1 **characterised in that** the adjusting lever (22) is limitedly rotatably connected to the connecting rod (16) by way of a bayonet fastening (32, 34).

3. A cutting height adjusting device according to claim 1 **characterised in that** a spring tongue (40) is integrated with the adjusting lever (22) as a biasing spring, the spring tongue projecting laterally from the adjusting lever (22) and being resiliently supported against a sliding surface of the chassis.

4. A cutting height adjusting device according to one of claims 1 to 3 **characterised in that** the adjusting lever (22) has a laterally projecting retaining hook (36) engaging behind a peripheral sliding surface on the connecting rod (16).

5. A cutting height adjusting device according to one of claims 1 to 4 **characterised in that** the connecting rod (16) has an abutment rib (44) which engages against a chassis transverse wall portion (46) in an end position.

6. A cutting height adjusting device according to one of claims 1 to 5 **characterised in that** the connecting rod (16) has an abutment (42) against which the adjusting lever (22) engages in an end position.

## Revendications

1. Dispositif de réglage de la hauteur de coupe pour des tondeuses à gazon, dans lequel quatre roues porteuses peuvent être simultanément, via des bras de manivelle (12) et un ensemble de parallélogramme articulé présentant une tringle de liaison (16), réglées en hauteur par rapport au châssis, et encliquetées au moyen d'un levier de réglage (22),
**caractérisé par** les caractéristiques suivantes :
a) la tringle de liaison (16) est équipée de dents d'encliquetage latérales (28), qui peuvent être encliquetées dans différentes positions d'encliquetage dans des évidements en forme de rainures (26) du châssis (14) ;
b) le levier de réglage (22) est monté à rotation sur un palier de rotation (30) de la tringle de liaison (16), et il peut pivoter sur le châssis (14) au moyen d'un oeil de palier (24) ;
c) le levier de réglage (22) précontraint latéralement par force de ressort la tringle de liaison (16) contre une paroi intérieure du châssis.

2. Dispositif de réglage de la hauteur de coupe selon la revendication 1, **caractérisé en ce que** le levier de réglage (22) est relié à la tringle de liaison (16) avec une possibilité de rotation limitée au moyen d'un joint à baïonnette (32, 34).

3. Dispositif de réglage de la hauteur de coupe selon la revendication 1, **caractérisé en ce qu'**une patte de ressort (40) est intégrée au levier de réglage (22) comme ressort de précontrainte, laquelle dépasse latéralement du levier de réglage (22) et s'appuie à effet de ressort sur une surface de glissement du châssis.

4. Dispositif de réglage de la hauteur de coupe selon l'une des revendications 1 à 3, **caractérisé en ce que** le levier de réglage (22) présente un crochet de maintien (36) dépassant latéralement, qui engage par l'arrière une surface de glissement périphérique de la tringle de liaison (16).

5. Dispositif de réglage de la hauteur de coupe selon l'une des revendications 1 à 4, **caractérisé en ce que** la tringle de liaison (16) présente une nervure de butée (44) qui, dans une position finale, agit sur une partie de paroi transversale (46) du châssis.

6. Dispositif de réglage de la hauteur de coupe selon l'une des revendications 1 à 5, **caractérisé en ce que** la tringle de liaison (16) présente une butée (42) sur laquelle agit le levier de réglage (22) dans une position finale.
